(19) Europäisches Patentamt
European Patent Office
Office européen des brevets

(11) EP 0 596 068 B1

# (12) FASCICULE DE BREVET EUROPEEN

(45) Date de publication et mention
de la délivrance du brevet:
**20.11.1996 Bulletin 1996/47**

(21) Numéro de dépôt: 93910144.0

(22) Date de dépôt: **19.05.1993**

(51) Int Cl.6: **G01B 7/14**, G01R 33/06,
G01D 5/16

(86) Numéro de dépôt international:
**PCT/FR93/00495**

(87) Numéro de publication internationale:
**WO 93/23720 (25.11.1993 Gazette 1993/28)**

(54) **CAPTEUR DE POSITION A AIMANT PERMANENT ET SONDE MAGNETOSENSIBLE**

LAGESENSOR MIT DAUERMAGNET UND MAGNETFELDMESSUNG

PERMANENT MAGNET TYPE POSITION SENSOR AND MAGNETISM-SENSITIVE PROBE

(84) Etats contractants désignés:
**CH DE ES GB IT LI**

(30) Priorité: **19.05.1992 FR 9206052**

(43) Date de publication de la demande:
**11.05.1994 Bulletin 1994/19**

(73) Titulaire: **MOVING MAGNET TECHNOLOGIES
S.A.
25000 Besançon (FR)**

(72) Inventeurs:
• OUDET, Claude
F-25000 Besançon (FR)
• PRUDHAM, Daniel
F-25220 Thise (FR)

(74) Mandataire: **Pernez, Helga
Breese Majerowicz,
Conseils en Propriété Industrielle,
CNIT World Trade Center 1,
BP 434
92053 Paris la Défense (FR)**

(56) Documents cités:
EP-A- 0 120 260          EP-A- 0 254 207
EP-A- 0 338 381          DE-A- 2 532 981
DE-A- 2 923 644          DE-A- 2 942 873

• CHIP, no. 5, Mai 1989, Würzburg DE, pages
20-22; H. HENCKE : 'Analoge
Halbleiter-Hallsensoren'
• ELECTRONIQUE RADIO PLANS, no. 511, Juin
1990, Paris FR, pages 11-17; D. PARET : "Les
capteurs magnéto-résistifs"

## Description

La présente invention concerne un capteur de position à sonde magnétosensible, destiné à mesurer des positions sur une trajectoire rectiligne. Le brevet allemand DE-A-2923644 décrit une sonde constituée par un stator ferromagnétique formé de deux parties isolées magnétiquement. Le stator comporte un orifice longitudinal formant l'entrefer à l'intérieur duquel un aimant permanent bipolaire peut se déplacer. Le capteur selon l'art antérieur comporte en outre deux sondes magnétosensibles dont le signal est transmis à un amplificateur différentiel. DE-A-2 532 981 décrit aussi de telles sondes.

L'objet de la présente invention est de proposer un capteur de fabrication et d'assemblage simplifiés, d'une grande fiabilité et délivrant un signal quasi-linéaire.

A cet effet, l'invention concerne plus particulièrement un capteur de position à aimant permanent bipolaire mobile à l'intérieur d'un entrefer principal mince délimité par les deux parties ferromagnétiques. De tels capteurs sont définis dans les revendications ci-dessous.

L'épaisseur de l'aimant permanent est faible par rapport à la largeur des pôles mesurés dans le sens du déplacement de telle sorte que l'induction soit sensiblement constante pour une position donnée le long de chacun des pôles du stator séparé par la fente où est logée la sonde magnétosensible. Typiquement, la largeur des pôles de l'aimant est au moins six fois supérieure à l'épaisseur L de l'aimant mesurée dans le sens de leur aimantation.

La perméabilité réversible de l'aimant est proche de 1, et de préférence inférieure à 1,2, afin d'obtenir une bonne linéarité de la réponse.

Les deux parties ferromagnétiques sont réunies par des pièces de liaisons non-magnétiques. La longueur de l'entrefer mesurée selon la direction de déplacement de l'aimant mobile, est au moins égale à 2 (C + E), C désignant la course de l'aimant et E la largeur de l'entrefer. La longueur de l'aimant est au moins égale à (C + E). La course de l'aimant mobile, aimanté selon la largeur de l'entrefer, est de $\pm\frac{C}{2}$. Par rapport à un entrefer secondaire, perpendiculaire à l'entrefer principal, et contenant la sonde magnétosensible.

La réalisation d'un tel capteur est simple et économique et permet une miniaturisation poussée.

Selon un mode de réalisation préféré, les deux parties ferromagnétiques sont réunies par des flasques latérales non-magnétiques, par exemple en laiton. Les parties ferromagnétiques sont avantageusement réalisées en fer-Nickel 50/50.

Selon une variante avantageuse, l'aimant mobile se déplace à l'intérieur d'une pièce tubulaire étanche placé entre les pièces ferromagnétiques. Le capteur selon cette variante permet de réaliser un capteur étanche, pour des applications telles que des capteurs pour vannes de commande de vérin.

Avantageusement, l'aimant est enrobé dans une gaine de matériau à faible coefficient de frottement tel que du Téflon.

De préférence, dans une réalisation comportant des aimants plans, la largeur Z de ces aimants mesurée suivant l'axe perpendiculaire à la direction du déplacement et à la direction de l'aimantation est supérieure ou égale à 3L, L désignant la longueur de l'aimant mesurée dans le sens de son aimantation.

Selon une variante de réalisation d'un capteur linéaire étanche, le dispositif selon l'invention comporte un organe mobile constitué par un palier présentant à sa partie supérieure un étrier pour l'accouplement d'une tige de liaison, ledit palier présentant une cavité dans laquelle est disposé une première partie ferromagnétique et un aimant mince, la deuxième partie ferromagnétique étant accolée à la surface extérieure du fond d'un boîtier réalisé en un matériau non magnétique, la sonde magnétosensible étant disposé dans un entrefer secondaire perpendiculaire à la direction de déplacement de l'organe mobile.

Selon une mode de réalisation particulier autorisant un degré de liberté en rotation de la tige de liaison, celle-ci comporte deux butées ainsi que deux ressorts disposés respectivement entre la butée arrière et la surface arrière de l'étrier, et la butée avant et la surface avant de l'étrier.

L'invention sera mieux comprise à la lecture de la description qui suit, faisant référence aux dessins où:

- la figure 1 représente une vue en coupe longitudinale d'un capteur selon l'invention,
- la figure 2 représente une vue du capteur selon une coupe perpendiculaire
- la figure 3 représente une vue en coupe axiale d'un capteur cylindrique
- la figure 4 représente une vue en coupe d'un capteur étanche conforme à l'invention ;
- la figure 5 représente une vue du capteur étanche selon un plan de coupe BB.

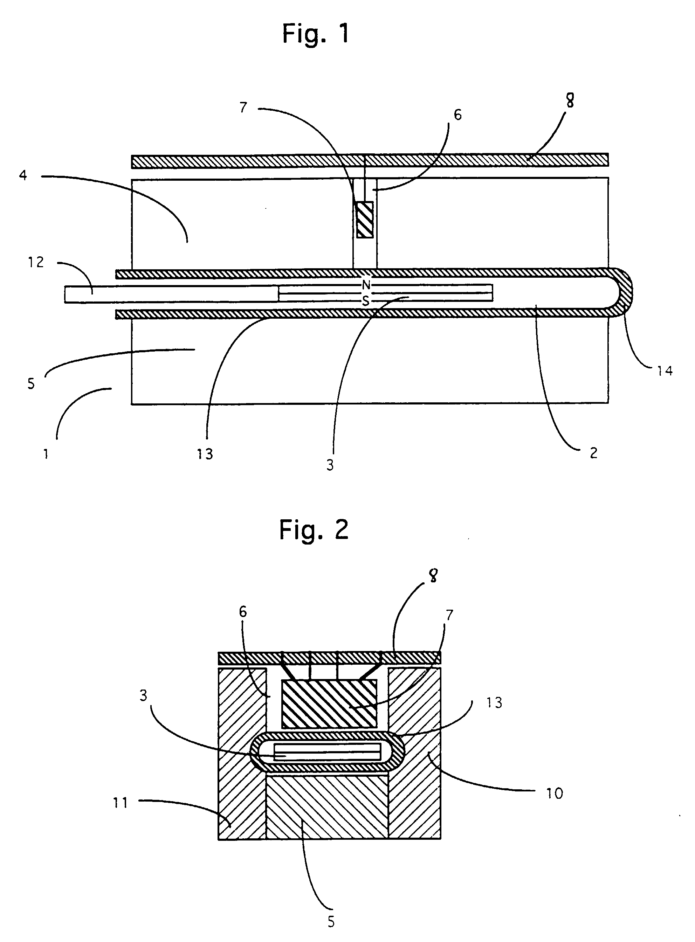

Le capteur selon l'invention, représenté en figure 1 et 2 selon une échelle 5, présente une course d'environ 8 millimètres.

Il est constitué par un stator (1) présentant un entrefer (2) à l'intérieur duquel est disposé un aimant mince (3).

Le stator est constitué d'une partie ferromagnétique supérieure (4) et d'une partie ferromagnétique inférieure et extérieur (5), réalisées en Fer-Nickel 50/50. Les deux parties ferromagnétiques (4, 5) déterminent entre elles un entrefer principal (2), d'une largeur de 3 millimètres. Par "largeur", on entend la dimension mesurée suivant la direction d'aimantation de l'aimant, perpendiculaire à la surface principale de l'aimant.

Les deux parties ferromagnétiques (4, 5) sont réunies par deux flasques latérales (10, 11) en laiton.

L'une des parties ferromagnétiques, dans l'exemple décrit la partie ferromagnétique supérieure (4), présente un entrefer secondaire (6) perpendiculaire à l'entrefer principal (2).

Une sonde magnétosensible (7) est positionnées dans cet entrefer secondaire (6), par exemple une sonde magnétosensible commercialisée par la société SIEMENS sous la référence KSY14. Elle est montée sur un circuit imprimé (8) assurant les liaisons électriques avec les composants du circuits d'amplification et de sortie.

L'aimant (3) est dans l'exemple décrit du type Samarium Cobalt SmlCo5. Il présente un pôle Nord orienté vers la partie ferromagnétique supérieure (4) et un pôle Sud orienté vers la partie ferromagnétique (5). Il est solidaire d'un organe d'accouplement (12) assurant la liaison avec la pièce dont on veut connaître la position. L'aimant présente dans l'exemple décrit une épaisseur de 1 millimètre, et une longueur de 11 millimètres

Afin d'assurer l'étanchéité entre la pièce dont on mesure la position et le capteur, un tube étanche (13), fermé à l'extrémité (14) opposée à l'organe d'accouplement (12), est mis en place dans l'entrefer. Les caractéristiques de ce tube (13) sont déterminées de façon à lui permettre de résister à la pression du fluide hydraulique dans le cas décrit correspondant à la mesure de la position d'un vérin de commande de vanne.

Ce tube étanche (13) délimite un volume intérieur dans lequel se déplace l'aimant (3).

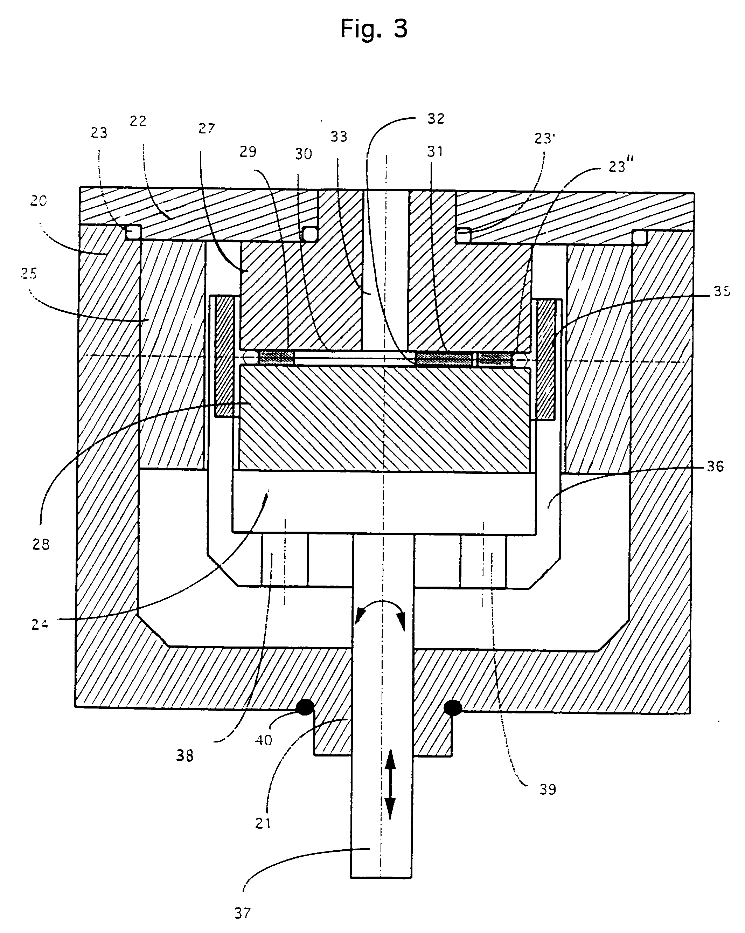

La figure 3 représente une vue en coupe d'un mode de réalisation d'un capteur à géométrie axiale, de forme cylindrique.

Le capteur selon ce mode de réalisation comporte un boîtier (20) rigide et étanche, de forme cylindrique, présentant à sa partie inférieure un passage d'axe (21). Il est réalisé en un matériau non magnétique, résistant le cas échéant à une pression de 350 bars, pour une application de mesure de la position pour électrovanne. La face opposée au passage d'axe (21) est obturé par un couvercle (22). Des joints toriques (23, 23', 23") assurent l'étanchéité du capteur.

Le stator est constitué d'une partie ferromagnétique intérieure (24) de forme cylindrique et d'une partie ferromagnétique extérieure (25) de forme annulaire, réalisées en Fer-Nickel 50/50.

Les deux parties ferromagnétiques (24, 25) déterminent entre elles un entrefer principal annulaire, d'une largeur de l'ordre de 1 à 3mm. Par "largeur", on entend la dimension mesurée suivant la direction d'aimantation de l'aimant, soit radialement dans le mode de réalisation.

La partie ferromagnétique extérieure (25) est solidaire du boîtier (20).

La partie ferromagnétique intérieure est constituée de deux pièces cylindriques (27, 28) en fer nickel 50/50, coaxiales et superposées, séparées par un anneau non magnétique (29). Un joint torique (23") assure l'étanchéité. Les deux pièces cylindriques (27, 28) déterminent entre elle un entrefer secondaire (30) dont la hauteur définie par l'épaisseur de l'anneau (29), est suffisante pour loger une sonde magnétosensible (31) placée dans cet entrefer, soit quelques 0,8 à 1mm. Les fils électriques (32) de la sonde magnétosensible (31) sortent du capteur par un orifice (33) étanche par rapport à l'intérieur du boîtier (20).

L'aimant permanent mince (35) est de type à aimantation radiale, par exemple un aimant commercialisé par la société SEIKO sous la dénomination "Samlet 9R". La longueur de l'aimant (35) est de préférence au plus égale au rayon.

L'aimant permanent peut également être constitué par une assemblage d'aimants en forme de tuiles, par exemple par trois aimants en forme de tuiles de 120°.

L'aimant (35) est solidaire d'un support en matériau non magnétique (36) de forme cylindrique, solidaire d'un axe de liaison (37) traversant le fond du boîtier (20) par un passage (21) étanche ou non. Dans le mode de réalisation représenté en figure 3, l'axe de liaison (37) peut tourner axialement sans perturber la mesure du déplacement axial.

Dans le cas oule passage d'axe (21) n'est pas étanche, il convient de prévoir des trous de circulation (38, 39) permettant le passage de l'air ou du fluide pendant les déplacement axiaux du support (32) de l'aimant (35).

Eventuellement, un joint torique (40) assure l'étanchéité entre le boîtier (20) du capteur et l'organe auquel il est raccordé.

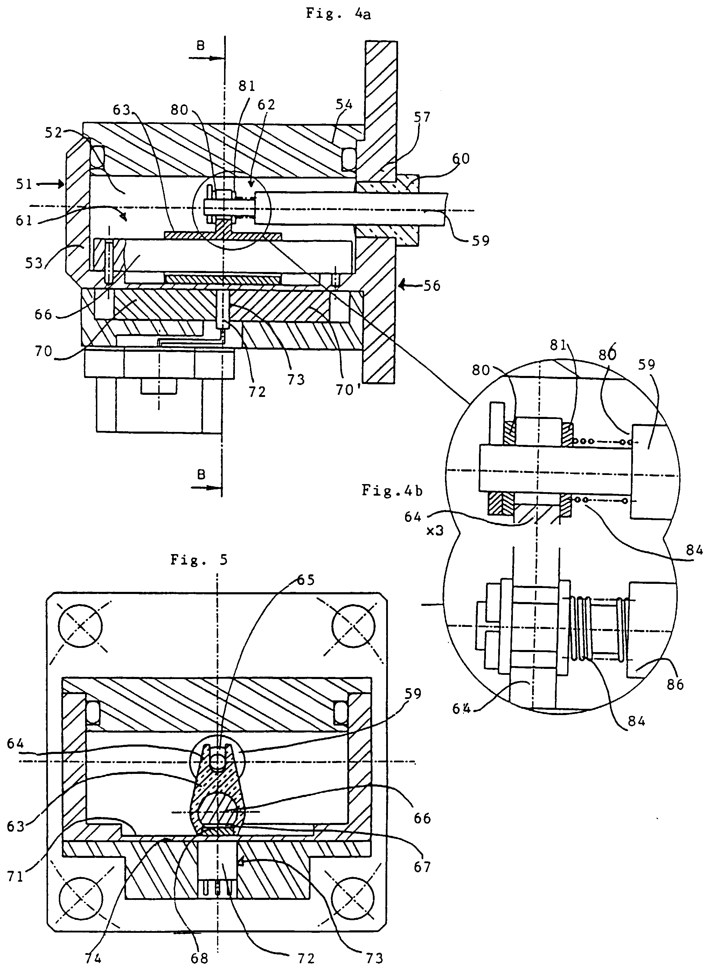

Les figures 4 et 5 représente une variante de réalisation du capteur linéaire selon l'invention, selon deux plans de coupe perpendiculaires.

Le capteur est constitué par un boîtier (51) étanche réalisé en un matériau non magnétique, tel que de l'aluminium ou un alliage d'aluminium. Ce boîtier présente une cavité cylindrique (52). Le boîtier est constitué par une partie inférieure (53) fermée par un couvercle (54). Un joint torique (55) assure l'étanchéité du boîtier. La face avant (56) présente un orifice (57) pour le passage d'une tige d'accouplement (59). Un palier (60) assure le guidage de la tige d'accouplement (59) et limite le jeu mécanique. Ce palier n'est pas nécessairement étanche. La tige d'accouplement (59) coopère avec la partie mobile (61) par l'intermédiaire d'un organe d'accouplement (61).

L'organe mobile (61) est constitué par un palier (63) en un matériau non magnétique, par exemple en bronze présentant à sa partie supérieure un étrier (64). Cet étrier (64) présente une fente (65) en "U" ajustée avec un très faible jeu sur le diamètre de l'extrémité de la tige d'accouplement (59). La tige de liaison présente deux butées (80, 81) empêchant le jeu axial, et permettant la rotation de la tige d'accouplement (59) par rapport à l'organe mobile (62).

La liaison entre l'organe mobile (61) et la tige (59) est représentée sur la figure 4 en grossissement x3. Un ressort (84) est disposé entre un épaulement (86) de la tige de liaison (59) et la butée avant (81). Ce ressort (84) presse la butée (81) contre l'étrier (64) et empêche ainsi le jeu dans la direction de déplacement de l'organe mobile. Par contre, lorsque l'organe mobile (62) arrive en fin de course, le ressort permet de limiter les contraintes mécanique.

La partie inférieure du palier en bronze (63) présente une cavité de forme générale cylindrique dans laquelle est insérée une pièce en fer doux stationnaire (66) constituant la première partie ferromagnétique. Cette pièce en fer doux présente à sa surface inférieure un méplat (67), parallèle au fond du boîtier. Un aimant mince (68) est disposé dans la partie inférieur de la cavité. La longueur $L_{fd}$ de la pièce en fer doux (66) est au moins égale à la longueur La de l'aimant augmentée de la course de l'organe mobile. L'aimant (68) est dans l'exemple décrit du type Samarium Cobalt SmlCo5. Il présente un pôle Nord orienté vers la partie ferromagnétique supérieure (66) et un pôle Sud orienté vers les pièces ferromagnétiques (70, 70'), ou réciproquement. Il est solidaire en translation de la tige d'accouplement (59) assurant la liaison avec la pièce dont on veut connaître la position. L'aimant présente dans l'exemple décrit une épaisseur de 1 millimètre, et une longueur de 11 millimètres.

La deuxième partie ferromagnétique est constituée par deux pièces en fer doux (70, 70') présentant un entrefer secondaire (73), collées contre la surface extérieure du fond (71) du boîtier en aluminium.

Une sonde magnétosensible (72) est positionnées dans cet entrefer secondaire, par exemple une sonde magnétosensible commercialisée par la société SIEMENS sous la référence KSY14.

L'entrefer principal est constitué par la distance entre les deux parties (66) et (70, 70') en fer doux. Cette distance comprend l'épaisseur du fond (71) du boîtier, déterminée en fonction des pressions auxquelles le boîtier doit résister et un espace (74) prévu entre la surface supérieure de l'aimant (68) et le méplat de la pièce ferromagnétique supérieure (66) . L'aimant (68) est en équilibre instable entre les deux parties en fer et en raison de cet équilibre, les forces magnétiques s'exerçant sur lui ne viennent pas perturber le déplacement de la tige d'accouplement.

Le palier en bronze (63) se déplace en glissant sur la pièce ferromagnétique (66) et supporte l'aimant permanent (68).

Le capteur selon ce mode de réalisation autorise un accouplement avec un dispositif présentant un degré de liberté en rotation, outre le degré de liberté linéaire selon la direction de mesure.

L'invention est décrite dans ce qui précède à titre d'exemple non limitatif, et il est évident que l'Homme du Métier sera à même d'y apporter des variantes pour l'adapter aux contraintes correspondant à une application particulière.

## Revendications

1. Capteur de position du type comportant une partie ferromagnétique présentant un entrefer principal (2) à l'intérieur duquel se déplace un aimant (3) permanent mince du type bipolaire et comportant un moyen de mesure de l'induction constitué par une sonde magnétosensible (7), caractérisé en ce qu'il comporte en outre un entrefer secondaire (6, 73) perpendiculaire à l'entrefer principal (2) dans lequel est positionné ladite sonde magnétosensible (7) et en ce que l'aimant (3) présente une caractéristique droite dans le deuxième quadrant de la courbe B (H), une perméabilité réversible inférieure à 1,2, de préférence un faible coefficient de température, et est mobile à l'intérieur d'un entrefer principal (2) mince délimité par deux parties ferromagnétiques (4, 5) réunies par des pièces de liaisons non-magnétiques (10, 11), la longueur de l'entrefer principal (2) mesurée selon la direction de déplacement de l'aimant mobile (3) étant au moins égale à 2(C + E), C désignant la course de l'aimant (3) et E la largeur de l'entrefer (2), la longueur de l'aimant (3) étant au moins égale à (C + E) et sa course égale à $\pm \frac{C}{2}$ par rapport à l'entrefer secondaire (6, 73).

2. Capteur de position selon la revendication 1 caractérisé en ce que les deux parties ferromagnétiques (4, 5) sont réunies par des flasques latérales (10, 11) non-magnétiques.

3. Capteur de position selon l'une quelconque des revendications précédentes, caractérisé en ce que l'aimant (3) se déplace à l'intérieur d'une pièce tubulaire (13) étanche .

4. Capteur de position selon l'une quelconque des revendications précédentes caractérisé, en ce que l'aimant (3) est enrobé dans une gaine de matériau à faible coefficient de frottement tel que du Téflon.

5. Capteur de position selon l'une quelconque des revendications précédentes caractérisé en ce que la largeur Z de l'aimant permanent, mesurés suivant l'axe perpendiculaire à la direction du déplacement et à la direction de l'aimantation est supérieure ou égale à 3L, L désignant la longueur de l'aimant (3) mesurée dans la direction de son aimantation.

6. Capteur de position selon l'une des revendications 1 à 4 caractérisé en ce que l'aimant (35) est de forme cylindrique, et est libre en rotation, la course de mesure étant axiale, et en ce que le stator est composé par une partie ferromagnétique extérieure (25) de forme cylindrique et par deux parties ferromagnétiques intérieures (27, 28) déterminant entre elle l'entrefer secondaire (30) à l'intérieur duquel est disposé la sonde magnétosensible.

7. Capteur de position selon la revendication 1 caractérisé en ce qu'il comporte un organe mobile (61) constitué par un palier (63) présentant à sa partie supérieure un étrier (64) pour l'accouplement d'une tige de liaison (59), ledit palier glissant sur une première partie ferromagnétique cylindrique comportant un méplat et comportant une cavité positionnant un aimant mince (68) parallèlement audit méplat, la deuxième partie ferromagnétique (70) étant accolée à la surface extérieure du fond (71) d'un boîtier réalisé en un matériau non magnétique, la sonde magnétosensible (72) étant disposé dans l'entrefer secondaire (73) perpendiculaire à la direction de déplacement de l'organe mobile (62).

8. Capteur de position selon la revendication 7 caractérisé en ce que la tige de liaison (59) comporte deux butées (80, 81) ainsi qu'un ressort (84) disposés respectivement entre la butée avant (81) et un épaulement (86) de la tige de liaison (59).

**Patentansprüche**

1. Lagesensor der Art, die einen ferromagnetischen Teil umfaßt, der einen Hauptpolluftspalt (2) aufweist, in dessen Innerem sich ein dünner Dauermagnet (3) verschiebt, und ein Meßmittel für die Induktion in Form einer magnetisch beeinflußbaren Sonde (7) umfaßt,
dadurch gekennzeichnet,
daß er weiters einen sekundären Luftspalt (6, 73) umfaßt, der zum Hauptpolluftspalt (2), in dem die magnetisch beeinflußbare Sonde (7) angeordnet ist, senkrecht steht, und dadurch, daß der doppelpolige Magnet eine gerade Charakteristik in dem zweiten Quadranten der Kurve B(H) aufweist, eine reversible Durchlässigkeit von weniger als 1,2, vorzugsweise einen schwachen Temperaturkoeffizienten, und im Inneren eines dünnen Hauptpolluftspaltes (2) beweglich ist, der durch zwei ferromagnetische Teile (4, 5) begrenzt ist, die durch nichtmagnetische Verbindungsstücke (10, 11) verbunden werden, wobei die Länge des Hauptpolluftspaltes (2), gemessen entlang der Richtung der Verschiebung des beweglichen Magnets (3), mindestens gleich 2 (C + E) ist, wobei C den Lauf des Magneten (3) und E die Breite des Luftspaltes (2) bezeichnet, wobei die Länge des Magneten (3) mindestens gleich (C + E) ist und sein Lauf im Vergleich zum sekundären Luftspalt gleich ± C/2 (6, 73) ist.

2. Lagesensor nach Anspruch 1,
dadurch gekennzeichnet,
daß die zwei ferromagnetischen Teile (4, 5) mit Hilfe von nicht-magnetischen seitlichen Flanschen (10, 11) verbunden werden.

3. Lagesensor nach einem der vorhergehenden Ansprüche,
dadurch gekennzeichnet,

daß der Magnet (3) sich im Inneren eines dichten röhrenförmigen Teils (13) verschiebt.

4. Lagesensor nach einem der vorhergehenden Ansprüche,
dadurch gekennzeichnet,
daß der Magnet (3) mit der Hülle eines Materials umhüllt ist, das einen geringen Reibungskoeffizienten aufweist, wie beispielsweise Teflon.

5. Lagesensor nach einem der vorhergehenden Ansprüche,
dadurch gekennzeichnet,
daß die Breite Z des Dauermagneten, die entlang der Achse gemessen wird, die zur Richtung der Verschiebung und zur Richtung der Magnetisierung senkrecht ist, größer oder gleich 3L ist, wobei L die Länge des Magneten (3) bezeichnet, die in der Richtung seiner Magnetisierung gemessen wurde.

6. Lagesensor nach einem der Ansprüche 1 bis 4,
dadurch gekennzeichnet,
daß der Magnet (35) zylinderförmig und frei drehbar ist, wobei der Meßlauf axial ist, und dadurch, daß der Stator aus einem zylinderförmigen ferromagnetischen äußeren Teil (25) und zwei inneren ferromagnetischen Teilen (27, 28) besteht, die unter sich den sekundären Luftspalt (30) bestimmen, in dessen Innerem die magnetisch beeinflußbare Sonde angeordnet ist.

7. Lagesensor nach Anspruch 1,
dadurch gekennzeichnet,
daß er ein bewegliches Organ (61) umfaßt, das aus einem Lager (63) besteht, welches wiederum an seinem oberen Teil einen Bügel (64) für die Verbindung eines Verbindungsstiftes (59) aufweist, wobei das Lager auf einem ersten ferromagnetischen, zylinderförmigen Teil gleitet, umfassend eine Abflachung und einen Hohlraum, wobei ein dünner Magnet (68) parallel zur Abflachung positioniert wird, wobei der zweite ferromagnetische Teil (70) an die äußere Oberfläche des Bodens (71) eines Gehäuses angebracht wird, das aus einem nicht-magnetischen Material besteht, wobei die magnetisch beeinflußbare Sonde (72) im sekundären Luftspalt (73) senkrecht zur Richtung der Verschiebung des beweglichen Organs (62) angeordnet ist.

8. Lagesensor nach Anspruch 7,
dadurch gekennzeichnet,
daß der Verbindungsstift (59) zwei Anschläge (80, 81) sowie eine Feder (84) umfaßt, die zwischen dem vorderen Anschlag (81) beziehungsweise einer Schulter (86) des Verbindungsstiftes (59) angeordnet sind.

## Claims

1. An attitude sensor of the kind comprosing a ferromagnetic part having a main pole air gap (2) in which a thin permanent magnet (3) of bipolar type moves and comprising an induction measurement means constituted by a magnetosensible probe (7), characterized in that it comprises further a secondary air gap (6, 73) perpendicular to the main pole air gap (2) in which said magnetosensible probe (7) is positioned and in that the magnet (3) has a straight feature in the second quadrant of the curve B(H), a reversible permeability lower to 1,2, preferably a slight temperature coefficient and is movable inside a thin main pole air gap (2) delimitated by two ferromagnetic parts (4, 5) joined by non-magnetic binding pieces (10, 11), the length of the main pole air gap (2) measured along the shifting direction of the movable magnet (3) being at least equal to 2(C + E), C designating the stroke of the magnet (3) and E the width of the air gap (2), the length of the magnet (3) being at least equal to (C + E) and its stroke equal to ± C/2 in relation to the second air gap (6, 73).

2. An attitude sensor according to claim 1, characterized in that the two ferromagnetic parts (4, 5) are joined by non-magnetic lateral flanges (10, 11).

3. An attitude sensor according to any of the above claims, characterized in that the magnet (3) moves inside a tight tubular piece (13).

4. An attitude sensor according to any of the above claims, characterized in that the magnet (3) is coated by a sheath made of a material having a slight coefficient of friction such as Teflon.

5. An attitude sensor according to any of the above claims, characterized in that the width Z of the permanent magnet , measured along the axis perpendicular to the shifting direction and to the magnetization direction is higher or equal to 3L, L designating the length of the magnet (3) mesured in the direction of its magnetization.

6. An attitude sensor according to one of the claims 1 to 4, characterized in that the magnet (35) is cylindrical in shape, and is free to rotate, the stroke of measure being axial, and in that the stator is made of an outer ferromagnetic part (25) cylindrical in shape and two inner ferromagnetic parts (27,28) defining between them the second air gap (30) in which the magnetosensible probe is disposed.

7. An attitude sensor according to claim 1, characterized in that it comprises a movable organ (61) constituted by a bearing (63) having on its higher part, a stirrup (64) for the coupling of a binding rod (59), said bearing gliding on a first cylindrical ferromagnetic part comprising a plane and comprising a cavity positionating a thin magnet (68) parallel to said plane, the second ferromagnetic part (70) being monted on the outer surface of the bottom (71) of a housing made of a non-magnetic material, the magnetosensible probe (72) being disposed in the secondary air gap (73) perpendicular to the shifting direction of the movable organ (62).

8. An attitude sensor according to claim 7, characterized in that the binding rod (59) comprises two abutments (80, 81) as well as a spring (84) disposed between the front abutment (81) and a shoulder (86) of the binding rod (59).

# Fig. 1

# Fig. 2

# Fig. 3

Fig. 4a

Fig.4b

Fig. 5